Europäisches Patentamt

**European Patent Office**

Office européen des brevets

(11) Numéro de publication : **0 006 064**
**B1**

(12) **FASCICULE DE BREVET EUROPÉEN**

(51) Int. Cl.³ : **B 05 B 7/14**, B 05 B 13/02,
C 03 C 17/22

(45) Date de publication du fascicule du brevet :
19.05.82

(21) Numéro de dépôt : 79400345.9

(22) Date de dépôt : 31.05.79

(54) Dispositif pour la distribution homogène d'un produit pulvérulent à travers une fente longitudinale et applications de ce dispositif.

(30) Priorité : 31.05.78 FR 7816272

(43) Date de publication de la demande :
12.12.79 (Bulletin 79/25)

(45) Mention de la délivrance du brevet :
19.05.82 Bulletin 82/20

(84) Etats contractants désignés :
BE CH DE FR GB IT LU NL SE

(56) Documents cités :
DE - A - 2 052 013
FR - A - 1 428 682
FR - A - 2 127 171
FR - A - 2 277 048
US - A - 3 866 571
US - A - 3 874 333

(73) Titulaire : **SAINT-GOBAIN INDUSTRIES**
**62, Bd Victor Hugo**
**F-92209 Neuilly sur Seine (FR)**

(72) Inventeur : **Marcault, Jeannik**
**64 Rue du Bournard**
**F-92700 Colombes (FR)**

(74) Mandataire : **Eudes, Marcel et al**
**Saint-Gobain Recherche 39 Quai Lucien Lefranc**
**F-93304 Aubervilliers Cedex (FR)**

Imprimerie Jouve, 18, rue St-Denis, 75001 Paris, France

**Dispositif pour la distribution homogène d'un produit pulvérulent à travers une fente longitudinale et applications de ce dispositif**

L'invention a pour objet un dispositif pour la distribution d'un produit pulvérulent, à travers une fente longitudinale d'évacuation et concerne également des applications de ce dispositif.

On sait que dans certaines techniques, on est amené à distribuer de façon régulière, en régime continu ou discontinu, des produits pulvérulents de faible granulométrie, en vue de déposer sur un substrat une couche d'épaisseur sensiblement uniforme de ces produits.

C'est ainsi qu'il est décrit dans la demande allemande DE-A-2052013, pour distribuer de façon homogène un produit pulvérulent à travers une fente longitudinale située à la base d'une trémie, de faire vibrer le fond de la trémie formant une des lèvres de la fente longitudinale et d'alimenter ladite trémie en produits pulvérulents en différents points régulièrement espacés de sa longueur à l'aide d'une pluralité de conduits élémentaires eux-mêmes alimentés en produits pulvérulents par un transporteur à secousses ; mais l'uniformité de la distribution sur toute la longueur de la fente n'est pas parfaite.

C'est ainsi également qu'il existe dans le commerce des dispositions de pulvérisation de peintures en poudre, mais les couches de peintures réalisées avec ces appareils peuvent présenter des variations sensibles d'épaisseur, sans qu'en souffre l'aspect extérieur de la surface peinte.

Il existe toutefois des techniques dans lesquelles l'épaisseur d'une couche de produit ainsi déposée par projection doit être d'une parfaite régularité, bien que les dimensions des particules de ce produit soient très petites, par exemple inférieures à 25 microns.

C'est le cas en particulier, dans la fabrication de vitrages semi-réfléchissants par pyrolyse de sels métalliques déposés en une mince couche sur la surface de ces vitrages. De tels vitrages destinés à réfléchir au moins une partie des radiations visibles ou du rayonnement infra-rouge, doivent être revêtus d'une couche de produit réfléchissant parfaitement régulière, toute variation d'épaisseur se traduisant par des défauts de transmission ou de réflexion, ou encore par l'apparition de zébrures ou autres anomalies à la surface du vitrage.

En vue d'éviter ces inconvénients, il est connu d'aspirer le produit pulvérulent à l'aide d'un moyen pneumatique, à partir d'un volume intermédiaire dans lequel ce produit est maintenu en suspension dans un flux gazeux, ledit volume étant lui-même alimenté à débit constant, par des moyens connus dans la technique, à partir d'une réserve du produit pulvérulent.

En utilisant des buses de pulvérisation d'un type classique, c'est-à-dire à orifice circulaire, pour procéder à de tels dépôts, il reste cependant très difficile d'obtenir des couches d'épaisseur constante sur un substrat, car les particules projetées par la buse ont des angles d'inclinaison variable par rapport à l'axe de la buse et des vitesses différentes. Il en résulte que la couche disposée sur une surface a des épaisseurs variables suivant la distance à l'axe de la buse. En outre, pour traiter des surfaces importantes, il est nécessaire de recourir à plusieurs buses, ce qui crée des difficultés au recouvrement des couches projetées par les différentes buses, ou à des buses animées d'un mouvement de va-et-vient par rapport au substrat, ce qui amène égalemen à un recouvrement partiel, en même temps que se posent des problèmes purement mécaniques.

Pour pallier ces inconvénients, on a certes déjà proposé d'utiliser des dispositifs comportant une fente de projection, mais il est extrêmement difficile d'obtenir un débit homogène sur toute la longueur de la fente.

En effet, cet organe de distribution est généralement alimenté par de la poudre en suspension dans un gaz, dans sa partie médiane, à l'aide d'un conduit cylindrique, et il est bien évident que ses deux extrémités reçoivent des quantités moindres de poudre que sa partie centrale. En outre, du fait de l'alimentation en produit pulvérulent par le gaz porteur dans un unique conduit, des dépôts de poudre risquent de se produire dans les zones à pertes de charge importantes, ce que l'on peut attribuer au fait que les écoulements ne s'effectuent pas régulièrement.

L'invention vise à remédier à ces inconvénients en proposant un dispositif de distribution d'un produit pulvérulent, du type comportant une fente d'évacuation, dans lequel le débit de poudre est sensiblement le même en tout point de la longueur de la fente d'évacuation.

A cet effet, l'invention a pour objet un dispositif pour la distribution homogène d'un produit pulvérulent à travers une fente longitudinale d'évacuation, du type dans lequel ladite fente est alimentée en produit pulvérulent en suspension dans un flux gazeux à l'aide d'un conduit d'alimentation, ce dispositif étant caractérisé en ce que ledit conduit se subdivise en une pluralité de conduits élémentaires de même longueur débouchant en des points régulièrement espacés suivant la longueur de ladite fente.

Du fait que les conduits élémentaires de ce dispositif ont tous la même longueur, les pertes de charge sont les mêmes dans chacun de ces conduits et ils auront donc tous le même débit. En espaçant régulièrement leurs orifices suivant toute la longueur de la fente d'évacuation, on obtient ainsi, à la sortie de chacun des conduits élémentaires, un même débit de gaz chargé du produit pulvérulent.

Avantageusement, ladite fente aura en coupe transversale un profil de venturi, afin d'améliorer encore l'homogénéité, non encore parfaite, de la distribution sur toute la longueur de la fente, d'un tube à l'autre.

Dans une forme de mise en œuvre préférée de l'invention, ladite fente d'évacuation n'est pas la fente de distribution proprement dite du dispositif, mais une fente primaire, alimentant une chambre d'homogénéisation, qu'alimentent également en gaz sous pression deux fentes parallèles à ladite fente primaire d'évacuation et disposées de part et d'autre de celle-ci, ladite chambre d'homogénéisation débouchant elle-même à l'extérieur par une fente de distribution.

L'arrivée de deux flux gazeux homogènes, sous un débit supérieur à celui de la fente primaire d'évacuation, de part et d'autre de cette fente d'évacuation, permet de parfaire l'homogénéité du produit pulvérulent en diluant le courant gazeux primaire portant ce produit pulvérulent. L'arrivée de ces deux flux permet également d'éviter le dépôt du produit pulvérulent sur les parois latérales de la chambre d'homogénéisation. L'échappement par la fente de distribution se fera de préférence par l'intermédiaire d'un venturi assurant une détente progressive.

Avantageusement, les fentes d'alimentation en gaz de la chambre d'homogénéisation communiquent par l'intermédiaire de conduits à chicanes avec des orifices séparés, eux-mêmes en communication avec des moyens d'alimentation en gaz sous pression. On réalise ainsi un ensemble à pertes de charge multiples (orifices, chicanes, fentes), qui favorisent l'homogénéisation de ces deux flux gazeux à la sortie des fentes et donc à l'intérieur de la chambre d'homogénéisation.

Suivant les applications du dispositif de distribution conforme à l'invention, on peut prévoir des moyens d'introduction d'un fluide auxiliaire en amont de la fente de distribution.

Les dessins schématiques annexés illustrent une forme de réalisation du dispositif selon l'invention. Sur ces dessins :

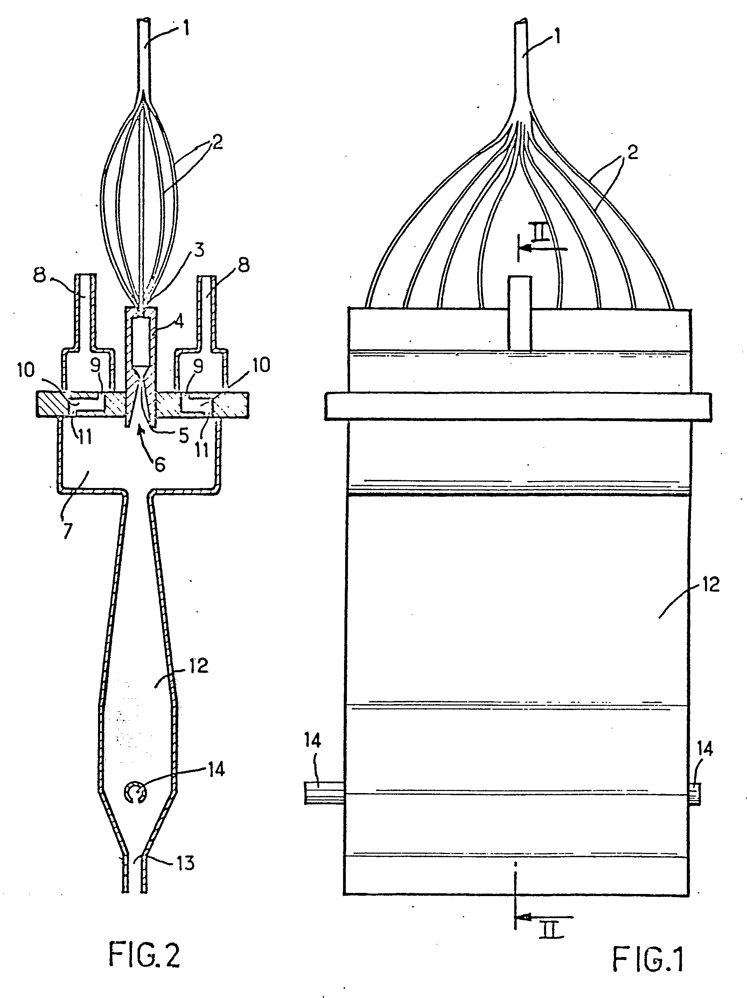

La figure 1 est une vue en élévation latérale du dispositif ;

La figure 2 est une coupe transversale de ce dispositif suivant la ligne II-II de la figure 1.

Le dispositif représenté comprend un conduit 1 d'alimentation en produit pulvérulent en suspension dans un gaz. Ce conduit 1 se subdivise en une pluralité de conduits élémentaires 2, de longueur égale, débouchant à intervalles réguliers en 3 suivant toute la longueur d'une cavité 4. Cette cavité 4a en coupe transversale, la forme d'un venturi 5 qui débouche par une fente longitudinale 6 d'évacuation dans une chambre d'homogénéisation 7.

Ainsi qu'il a été expliqué ci-dessus, du fait de la même longueur des conduits élémentaires 2, les pertes de charge seront identiques dans les différents conduits et la cavité 4 sera alimentée avec des débits identiques suivant toute la longueur.

De part et d'autre de la fente d'évacuation 6, la chambre 7 est alimentée en gaz sous pression par deux conduits 8, communiquant respectivement par l'intermédiaire d'orifices 9 et d'un évidement à chicane 10, avec une fente 11 parallèle à la fente d'évacuation 6. Ce mode d'alimentation en gaz sous pression des fentes 11 permet d'obtenir à ces sorties 11 un débit uniforme. Ce dernier vient homogénéiser par dilution dans la chambre 7 le mélange poudre-gaz provenant de la fente d'évacuation 6. Du fait de leur dispositifion de part et d'autre de la fente d'évacuation 6, les fentes 11 d'alimentation en gaz de la chambre 7 évitent une accumulation de poudre sur les parois de cette chambre.

Celle-ci communique par un divergent, puis un convergent 12, avec une fente longitudinale de distribution 13, par laquelle le produit pulvérulent est évacué avec un même débit suivant toute sa longueur. Entre la fente d'évacuation 6 et la fente de distribution 13 peuvent être disposés des conduits 14 permettant d'introduire de façon homogène dans le mélange un ou plusieurs gaz auxiliaires, suivant les applications envisagées pour le dispositif.

Pour l'application évoquée ci-dessus à la réalisation de vitrages semi-transparents par dépôts de sels métalliques en couche mince sur la surface de ces vitrages et pyrolyse de ces sels, la demanderesse a utilisé avec succès des dispositifs conformes à l'invention pour déposer les sels métalliques. Ces dispositifs avaient des longueurs de fente de 250 à 650 mm. En juxtaposant des disposifits modulaires de ce type, la demanderesse a pu traiter sans difficultés des rubans ou des plaques de verre pouvant atteindre plusieurs mètres de largeur et défilant à une vitesse d'environ 6 m/mn transversalement à la fente de distribution 13 du dispositif.

Les débits gazeux varient suivant le type du produit à pulvériser et les dimensions de la fente de distribution 13. A titre d'exemple, la demanderesse a utilisé avec succès des débits normaux de 1 $m^3$/h par cm de longueur de fente d'évacuation 6 en air chargé de poudre en suspension et de 4 $m^3$/h d'air injecté dans la chambre d'homogénéisation 7 par cm de longueur de fente 11 d'alimentation en air, la vitesse du flux gazeux chargé de poudre à la sortie du dispositif étant, dans ces conditions, voisine de 7 m/s.

Dans une variante d'application du dispositif selon l'invention, la demanderesse a utilisé simultanément deux dispositifs analogues disposés en parallèle pour déposer, sur une même face d'un ruban ou d'une plaque de verre défilant au droit des fentes de ces dispositifs et transversalement à celles-ci, deux couches soit d'un même produit pulvérulent, soit de deux produits distincts. Pour la réalisation de vitrages semi-réfléchissants, l'un de ces produits peut réfléchir avantageusement les radiations visibles et l'autre le rayonnement infra-rouge.

Bien entendu, au lieu de déposer deux couches sur une même face d'une plaque de verre, des dispositifs selon l'invention peuvent être utilisés pour appliquer sur chacune des faces d'un vitrage une couche d'un même produit ou de deux produits distincts.

L'homogénéité des dépôts de poudre ainsi réalisés est excellente, puisque, en utilisant dans les applications ci-dessus des produits très sensibles aux variations d'épaisseur, par exemple des produits tels que l'oxyde d'étain, qui après pyrolyse donnent en réflexion des colorations d'interférence, la Demanderesse a obtenu des vitrages parfaitement monochromatiques aussi bien que dans le sens longitudinal (sens de défilement du vitrage sous le dispositif conforme à l'invention) que transversalement.

Comme déjà indiqué ci-dessus, le dispositif conforme à l'invention présente en outre l'avantage de pouvoir être réalisé sous forme modulaire, ce qui permet de juxtaposer un nombre variable de dispositifs en vue de s'adapter à la largeur du substrat à traiter.

En outre, l'appareillage étant à poste fixe et ne comportant pas de pièces en mouvement, il est d'une grande fidélité d'emploi.

Bien entendu, le dispositif conforme à l'invention n'est pas limité aux applications mentionnées ci-dessus et il peut être employé dans toute technique impliquant le dépôt sur un support, sous une forme homogène, de produits en poudre, par exemple de peintures, d'émaux, etc.

### Revendications

1. Dispositif pour la distribution homogène d'un produit pulvérulent à travers une fente longitudinale d'évacuation 6, du type dans lequel ladite fente 6 est alimentée en produit pulvérulent en suspension dans un flux gazeux à l'aide d'un conduit d'alimentation 1, ce dispositif étant caractérisé en ce que ledit conduit 1 se subdivise en une pluralité de conduits élémentaires 2 de même longueur débouchant en des points régulièrement espacés suivant la longueur de ladite fente 6.

2. Dispositif selon la revendication 1, caractérisé en ce que ladite fente 6a, en coupe transversale, un profil de venturi.

3. Dispositif selon l'une des revendications 1 et 2, caractérisé en ce que ladite fente 6 est une fente primaire, alimentant une chambre d'homogénéisation 7, qu'alimentent également en gaz sous pression deux fentes 11 parallèles à ladite fente primaire 6 et disposées de part et d'autre de celle-ci, ce gaz sous pression étant homogène tout le long des deux fentes 11 parallèles, ladite chambre 7 débouchant elle-même à l'extérieur par une fente de distribution 13.

4. Dispositif selon la revendication 3, caractérisé en ce que la fente de distribution 13 est précédée d'un divergent-convergent 12.

5. Dispositif selon l'une des revendications 3 et 4, caractérisé en ce que les fentes 11 d'alimentation en gaz de la chambre d'homogénéisation 7 communiquent, par l'intermédiaire de conduits à chicanes 10, avec des orifices 9 séparés, eux-mêmes en communication avec les moyens d'alimentation en gaz sous pression.

6. Dispositif selon l'une des revendications 3 à 5, caractérisé en ce que ladite chambre d'homogénéisation 7 comporte des moyens permettant l'introduction d'au moins un gaz auxiliaire en amont de la fente de distribution 13.

7. Application d'un dispositif selon l'une des revendications 1 à 6 à la réalisation d'un vitrage semi-réfléchissant par dépôt sur au moins une face de ce vitrage, de sels métalliques et pyrolyse subséquente de ces sels, application caractérisée en ce que lesdits sels sont projetés sur ledit vitrage à l'aide dudit dispositif.

8. Application selon la revendication 7, caractérisée en ce qu'une pluralité de dispositifs modulaires selon l'une des revendications 1 à 6 sont juxtaposés de façon telle que les fentes de distribution 13 soient dans le prolongement les unes des autres.

9. Application selon une ou plusieurs des revendications 7 et 8, caractérisée en ce que le ou lesdits dispositifs sont en position fixe, tandis que ledit vitrage défile dans une direction perpendiculaire à la fente de distribution 13 de ces dispositifs.

10. Application selon l'une des revendications 7 à 9, caractérisée en ce qu'au moins deux dispositifs conformes à l'une des revendications 1 à 6 sont disposés en parallèle d'un même côté du vitrage et projettent sur la même face du vitrage deux produits différents.

11. Application selon l'une des revendications 7 à 9, caractérisée en ce qu'au moins deux dispositifs conformes à l'une des revendications 1 à 6 sont disposés de part et d'autre du vitrage et projettent respectivement un produit différent sur la face associée du vitrage.

### Claims

1. Apparatus for distribution in a homogeneous manner of a particulate product through a longitudinal exit slit 6, of the type in which said slit 6 is supplied with particulate product in suspension in a gaseous flow by means of a feed conduit 1, this apparatus being characterised in that said conduit 1 is subdivided into a plurality of secondary conduits 2 of the same length opening at points regularly spaced along the length of said slit 6.

2. Apparatus according to claim 1, characterised in that said slit 6a has in transverse section, a venturi profile.

3. Apparatus according to one of claims 1 and 2, characterised in that said slit 6 is a primary slit, feeding an homogenisation chamber 7, which also feeds with gas under pressure two slits 11 parallel to said primary slit 6 and arranged on either side of the latter, this gas under pressure being homogeneous along the whole length of the two parallel slits 11, said chamber 7 itself opening to the exterior by a distribution slit 13.

4. Apparatus according to claim 3, characterised in that the distribution slit 13 is preceded by a divergent and a convergent portion 12.

5. Apparatus according to one of claims 3 and 4, characterised in that the slits 11 for feed of gas to the homogenisation chamber 7 communicate, by means of baffle conduits 10, with separated orifices 9, themselves in communication with the means for feeding gas under pressure.

6. Device according to one of claims 3 to 5, characterised in that said homogenisation chamber 7 comprises means allowing introduction of at least one additional gas upstream of the distribution slit 13.

7. Application of apparatus according to one of claims 1 to 6 to manufacture of a semi-reflecting pane by deposition on at least one surface of this pane, of metallic salts and subsequent pyrolysis of these salts, the application being characterised in that said salts are projected onto said pane by means of said apparatus.

8. Application according to claim 7, characterised in that a plurality of modular apparatuses according to one of claims 1 to 6 are juxtaposed in such a manner that the distribution slits 13 are each in the extension of the others.

9. Application according to one or more of claims 7 and 8, characterised in that the apparatus or apparatuses are in fixed position, whereas said pane passes in a direction perpendicular to the distribution slit 13 of these apparatuses.

10. Application according to one of claims 7 to 9, characterised in that at least two apparatuses according to one of claims 1 to 6 are arranged in parallel on the same side of the pane and project two different products onto the same face of the pane.

11. Application according to one of claims 7 to 9, characterised in that at least two apparatuses according to one of claims 1 to 6 are arranged on either side of the pane and project respectively different products onto the associated face of the pane.

**Ansprüche**

1. Vorrichtung zum gleichmäßigen Verteilen von pulverförmigen Material über eine schlitzförmige Materialaustrittsöffnung, die über eine Zufuhrleitung mit in einem Gasstrom suspendiertem pulverförmigen Material gespeist wird, dadurch gekennzeichnet, daß die Zufuhrleitung (1) in eine Vielzahl von Einzelleitungen (2) gleicher Länge unterteilt ist, die mit gleichem gegenseitigen Abstand über die Länge der schlitzförmigen Öffnung (6) in diese münden.

2. Vorrichtung nach Anspruch 1, dadurch gekennzeichnet, daß die schlitzförmige Öffnung (6) im Querschnitt die Form einer Venturidüse hat.

3. Vorrichtung nach Anspruch 1 oder 2, dadurch gekennzeichnet, daß die schlitzförmige Öffnung (6) als Hauptöffnung eine Homogenisierkammer (7) speist, die zugleich über zu beiden Seiten der Hauptöffnung (6) angeordnete und zu dieser parallele Schlitze (11) mit Druckgas gespeist wird, das aus diesen Schlitzen (11) über die gesamte Länge derselben in homogener Form austritt, wobei die Homogenisierkammer (7) ihrerseits über einen Verteilschlitz (13) nach außen mündet.

4. Vorrichtung nach Anspruch 3, dadurch gekennzeichnet, daß dem Verteilschlitz (13) ein in Strömungsrichtung divergenter und sodann konvergenter Kammerabschnitt (12) vorgeschaltet ist.

5. Vorrichtung nach Anspruch 3 oder 4, dadurch gekennzeichnet, daß die Druckgaszuführschlitze (11) der Homogenisierkammer (7) über Schikanen (10) mit getrennten Öffnungen (9) in Verbindung stehen, die ihrerseits mit Druckgaszufuhreinrichtungen (8) in Verbindung stehen.

6. Vorrichtung nach einem der Ansprüche 3 bis 5, dadurch gekennzeichnet, daß die Homogenisierkammer (7) eine Einrichtung (14) zum Zuführen zumindest eines Hilfsgases stromaufwärts des Verteilschlitzes (13) aufweist.

7. Verwendung der Vorrichtung nach einem der Ansprüche 1 bis 6 zum Herstellen einer halbreflektierenden Verglasung durch Ablagerung von Metallsalzen auf zumindest eine Verglasungsfläche und nachfolgende Pyrolyse der Salze, dadurch gekennzeichnet, daß die Salze auf die Verglasung mit Hilfe der erläuterten Vorrichtung aufgesprüht werden.

8. Verwendung nach Anspruch 7, dadurch gekennzeichnet, daß mehrere Vorrichtungsmodulen nach einem der Ansprüche 1 bis 6 nebeneinander angeordnet werden, derart, daß die Verteilschlitze in der gegenseitigen Verlängerung liegen.

9. Verwendung nach Anspruch 6 oder 7, dadurch gekennzeichnet, daß die Vorrichtung oder die Vorrichtungen ortsfest angeordnet sind und die Verglasung in Richtung senkrecht zum Verteilschlitz jeder Vorrichtung an dieser vorbeiwandert.

10. Verwendung nach einem der Ansprüche 7 bis 9, dadurch gekennzeichnet, daß zumindest zwei Vorrichtungen nach einem der Ansprüche 1 bis 6 parallel zueinander auf der gleichen Seite der Verglasung angeordnet sind und auf die gleiche Seite der Verglasung zwei verschiedene Materialien aufsprühen.

11. Verwendung nach einem der Ansprüche 7 bis 9, dadurch gekennzeichnet, daß zumindest zwei Vorrichtungen nach einem der Ansprüche 1 bis 6 zu beiden Seiten der Verglasung angeordnet sind und auf die zugeordneten Seiten der Verglasung verschiedene Materialien aufsprüchen.

FIG.2

FIG.1